# EUROPEAN PATENT SPECIFICATION

(11) **EP 2 384 868 B1**
(45) Date of publication and mention of the grant of the patent: **26.09.2012**
(21) Application number: 11164358.1
(22) Date of filing: 29.04.2011
(51) Int. Cl.: B26D 3/28, B26D 3/16, B23D 21/10, B23B 5/16

(54) **Pipe scraper**
Rohrschrapper
Dispositif de surfaçage pour tuyaux

(30) Priority: 03.05.2010 IT MI20100764
(43) Date of publication of application: 09.11.2011
(73) Proprietor: C.B.C. S.r.l., 42016 Guastalla (RE) (IT)
(72) Inventor: Vezzani, Giorgio, 42016 GUASTALLA (RE) (IT)
(74) Representative: Ripamonti, Enrico

(56) References cited:
- EP-A1- 1 166 927
- EP-A2- 1 306 149
- AT-B- 321 071
- DE-A1- 3 529 527
- DE-U1- 9 305 220
- GB-A- 1 443 622
- GB-A- 2 296 886
- GB-A- 2 365 811

## Description

The present invention relates to a pipe scraper according to the preamble of claim 1. An example of such a pipe-scraper is disclosed in EP 1 166 927. Such a tool enables the end of a pipe (in particular a plastic pipe) to be externally scraped. Such an operation is carried out when for example two plastic pipes are to be connected together, the corresponding ends of which have to be scraped to enable the joint to be made.

To avoid any misunderstanding, it should be noted that the term "pipe" indicates herein not only an actual pipe, but also a cable the outer tubular sheath of which is required to be scraped, and more generally any cylindrical element the outer surface of which is required to be scraped for a determined length in the longitudinal direction.

EP-B-1306149 describes a pipe scraper comprising:
- a pipe carrier means on which the pipe to be scraped rests;
- a scraper means comprising both a scraper head, provided with at least one scraper blade, the scraper head being arranged to swivel about an axis substantially parallel to the pipe, and a guide means intended to rest on the pipe outer surface and to cause the scraper blade to follow this outer surface in order to scrape it, along a cylindrical helical path coaxial to the pipe;
- a support means carrying both the pipe carrier means and the scraper means such that the distance between the two can be varied.

Both the pipe carrier means and the guide means comprise idle wheels which rest against the pipe to be scraped. In particular, in the embodiment described and illustrated in EP-B-1306149 the guide means comprises two guide wheels arranged in coaxial pairs, their axis of rotation, as stated in EP-B-1306149, being slightly inclined to the axis of the pipe to be scraped.

When this scraper tool is used and in particular is manually rotated about the pipe to be scraped by acting on the operating handle with which it is provided, said inclination of the axis of the pair of idle wheels of the guide means causes the scraper blade, in scraping the outside of the pipe, to undergo about this latter, normally commencing from one of its ends, a cylindrical helical path coaxial with the pipe. Evidently the width of the scraped helical band of the pipe depends on the width of the scraper blade. For a determined blade, the pitch of said helical path should be such that the band scraped in one tool revolution about the pipe is superimposed to the least possible extent on, and preferably merely adjacent to, that of the previous revolution, without however leaving unscraped parts within the relative pipe length to be scraped.

Since this pipe scraper serves for different diameter pipes, up to a maximum diameter conditioned by the pipe maximum diameter able to be received within it, said inclination of the rotational axis of the wheels of the scraper means must be chosen such as to achieve the non-superimposed and adjacent condition of the scraped bands for each revolution when a pipe of the maximum diameter receivable by the scraper is scraped. The result is that if lesser diameter pipes are scraped there is superimposition of the scraped bands in two consecutive revolutions of the tool, the extent of this superimposition being greater the smaller the pipe. Another result is that the smaller the pipe, the greater the number of revolutions about the pipe which the pipe scraper has to undergo to scrape a determined length thereof, with a corresponding increase in the required time compared with that if there were no superimposition but only adjacency between the bands scraped during each revolution.

The object of the present invention is to provide a pipe scraper which does not present the aforesaid drawback.

This object is attained by the pipe scraper according to the enclosed set of claims

Because the guide means comprises idle guide wheels which rest on the pipe surface, the means for varying the pitch of said helical path are means which enable variation of the angle formed between the axis of rotation of said guide wheels and the axis of the pipe to be scraped, such that that band scraped during one revolution of the pipe scraper is preferably adjacent to the band scraped during the next revolution or at most between the two bands there is only a minimum of superimposition.

According to the present invention, said support means can form a single piece with said pipe carrier means.

The invention will be more easily understood from the ensuing description of one embodiment thereof provided by way of example only. In this description reference is made to the accompanying drawings, in which:
Figure 1 is a perspective view of a pipe scraper according to the present invention;
Figure 2 is a perspective view from the same viewpoint as Figure 1, but shown in the exploded state;
Figure 3 is a perspective view of the scraper means alone;
Figure 4 is an elevational view of the pipe scraper of Figure 1 in the direction of the arrow 4 of this latter figure, but with the operating handle removed from the pipe scraper, and in addition showing the external profile of the cross-section of a pipe of the maximum diameter receivable by the scraper;
Figure 5 is similar to Figure 4, but with the difference that the scraper is applied to a pipe of considerably lesser diameter than that of Figure 4;
Figure 6 is a section taken on the line 6-6 of Figure 4 through the scraper means alone;
Figure 7 is a plan view of the scraper means of Figure 6, taken from below.

The pipe scraper 10 represented in the figures is of the type in which the support means 12 forms a single piece with the pipe carrier means 14, the combination being provided with a handle 53 which facilitates the use of the scraper 10. From the figures it can be seen that the pipe carrier means 14 comprises, in the specific illustrated example, two opposing sets of four idle wheels in coaxial pairs, of which in the specific example the two more inner 16 of each set are of lesser diameter while the other two 17 are of greater diameter, the relative axes of rotation being mutually parallel.

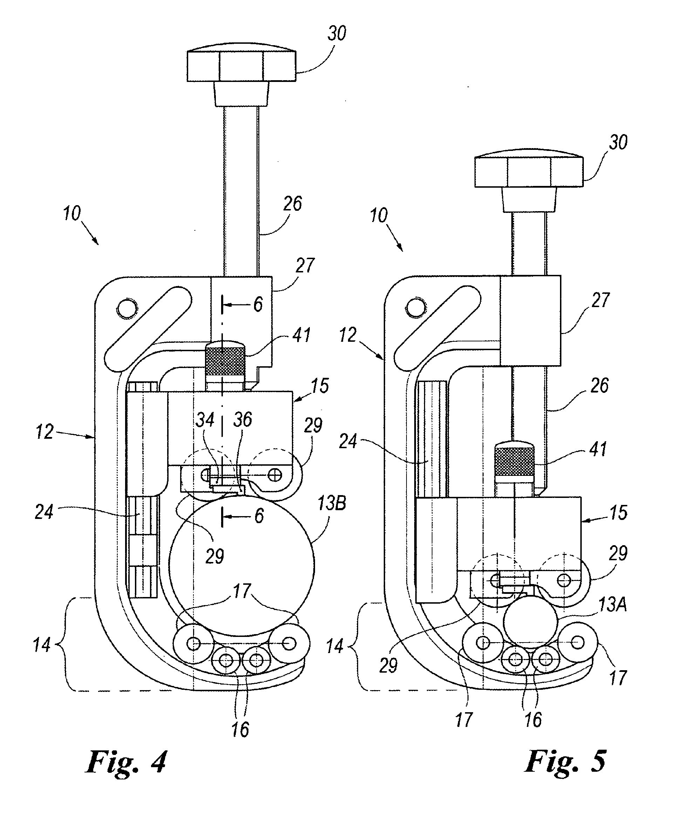

As can be seen from Figures 4 and 5, the idle wheels 16 and 17 form two opposing sets and are disposed such that a pipe 18 to be scraped, whether of small diameter (13A in Figure 5) or of the maximum diameter insertable into the pipe scraper 10 (13B in Figure 4), rests at least on two wheels of each set, the axis of the pipe 13 being parallel to that of the wheels 16 and 17.

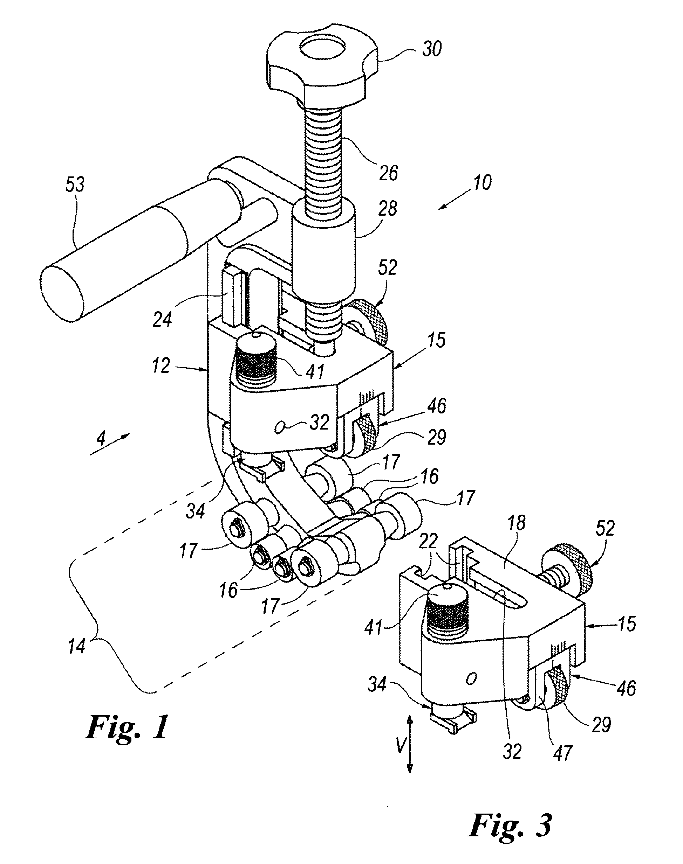

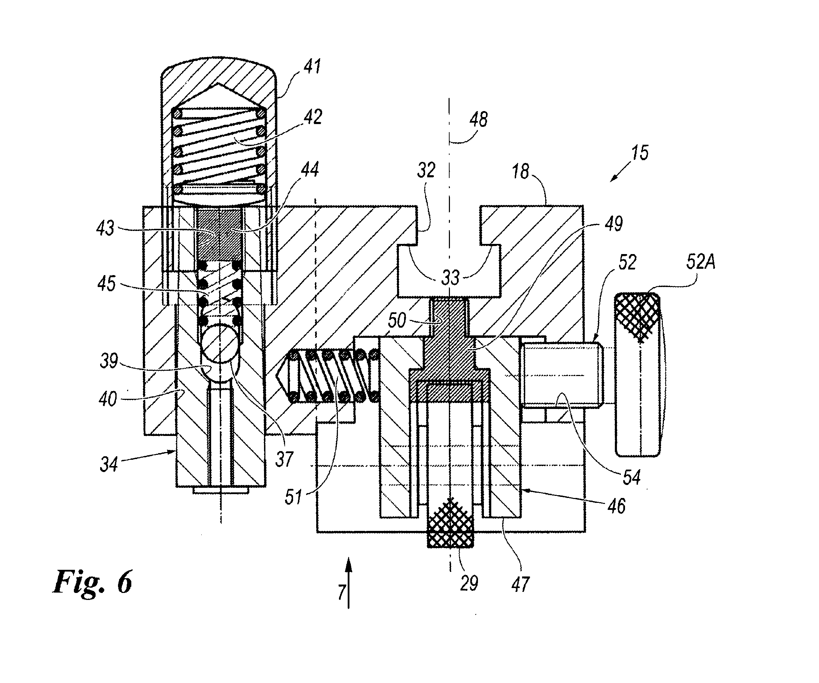

The pipe scraper 10 also comprises a scraper means, indicated overall by 15, the body 18 of which is provided with a seat in which two opposing vertical grooves 22 are provided to receive corresponding opposing vertical ribs (of which in Figures 1, 4 and 5 only one, indicated by 24, is visible) provided in the support means 12, such that the scraper means 15 is able to be moved in vertical direction, within determined limits, relative to the support means 12. This enables all pipes 13 having a diameter less than or equal to that of the pipe 13B (i.e. that pipe of maximum diameter receivable by the scraper 10) to be inserted between the scraper means 15 and the pipe carrier means 14. A mechanism comprising a lead screw 26 and lead nut 27, this latter provided in an extension 28 of the support means 12, enables the scraper means 15 to be moved (as indicated by the double arrow V of Figure 3) in a precise manner along the ribs 24, in order to bring it for example into the position shown in Figures 4 or 5, in which two idle wheels 29, with which the scraper means 15 is provided, rest against the pipe 13A or 13B. To facilitate this operation, a knob 30 is fixed to the far end of the screw 26. The near end 31 of this screw 26 is instead shaped as a cylindrical head 31 and is rotatably constrained to the body 18 of the scraper means 15 once inserted into a slot 32 with undercuts 33 (Figure 6), provided in the body 18.

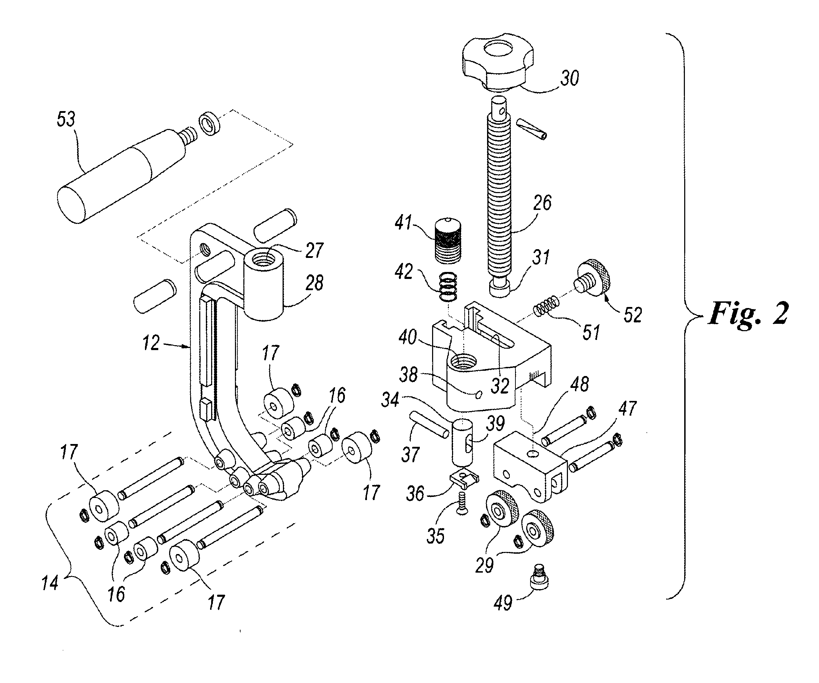

The scraper means 15 also comprises a slightly frusto-conical scraper head 34, to the lower end of which a conventional scraper blade 36 (not present in Figure 6) can be fixed by a screw. The scraper head 34 is inserted into a through hole 40 provided in the body 18, the upper part of this hole having a slightly greater diameter and being threaded to receive a hollow plug 41, the external lower part of which is also threaded. The scraper head 34 is held in position by a peg 37 inserted through a longitudinal slot 39 (Figures 2 and 6) provided in the head 34, and into corresponding holes 38 provided in the body 18 of the scraper means. The plug 41 contains a preloaded helical spring 42 which urges the head 34 downwards. The downward thrust exerted on the head 34 can be adjusted by screwing the plug 41 into the hole 40 to a greater or lesser extent. As can be seen in Figure 6, the head 34 presents a hole 43 having a threaded upper part, a setscrew 44 being screwed into this hole to rest on the upper end of a preloaded helical spring 45 also inserted into the hole 43 and having its other end resting on the peg 37. The spring 45 enables the head 34 to be maintained against the spring 42, to take up any slack.

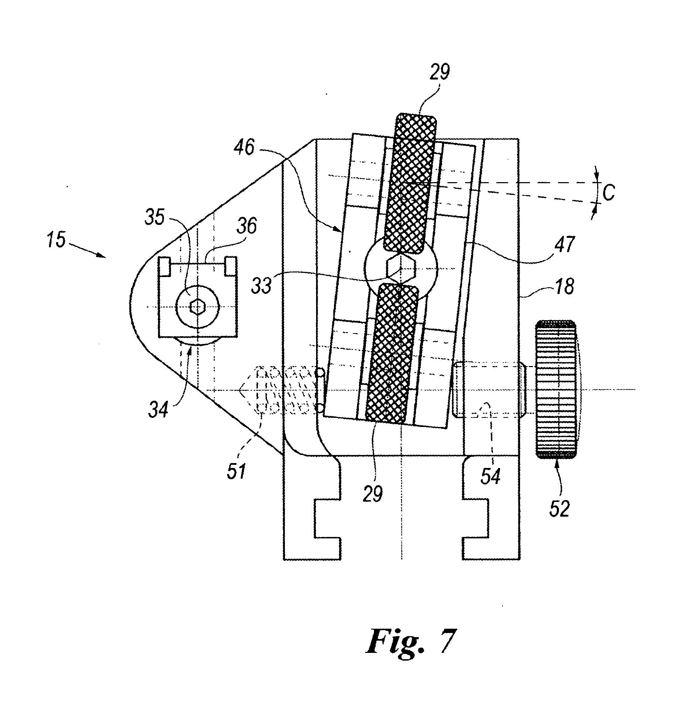

The scraper means 15 also comprises a guide means 46 comprising a guide body 47 to which the two aforesaid guide wheels 29 are idly pivoted. As better seen from Figures 6 and 7, the guide body 47 can move angularly, within a determined angular range, about an axis 48 which is also the axis of a screw 49 screwed into a threaded hole 50 provided in the body 18 of the scraper means 15. A mechanism is also provided enabling the angular positioning of the guide body 47 to be adjusted relative to the rest of the scraper means 15, and in practice enabling the angle formed between the axis of the guide wheels (29) and the axis of the pipe (13) to be verified, this angle being indicated by C in Figure 7. The aforesaid mechanism comprises a screw 52 the axis of which is perpendicular to the axis 48 but without intersecting it, and a preloaded helical opposition spring 51. The screw 52 can be screwed to a greater or lesser extent into a threaded hole 54 provided in the body 18. As is apparent in particular from Figure 7, by acting on the knob 52A with which the screw 52 is provided, said angular positioning can be adjusted. As already explained, this enables the pitch of the helical path described by the scraper blade 36 about the pipe 13 to be varied when this latter is scraped.

By way of example, for a pipe scraper which can receive pipes up to 75 mm diameter (i.e. those used in normal residential or office installations) an angular range of 5° is sufficient. However there is nothing to prevent pipe scrapers being constructed able to receive pipes of greater diameter, for example from 75 to 200 mm.

With regard to the method of using the pipe scraper 10, this is already apparent to an expert of the art from the aforegoing.

Finally, it should be noted that the ability to vary the pitch of the helical path of the scraper blade enables a significant reduction in the time required for the scraping operation in the case of pipes with a diameter less than that of the maximum diameter pipe insertable into the scraper 10 compared with the time required if using a scraper in accordance with EP-B-1306149, the time saving being percentage-wise much greater the smaller the pipe diameter.

## Claims

1. A pipe scraper (10) comprising:
- a pipe carrier means (14) on which the pipe (13) to be scraped rests;
- a scraper means (15) comprising both a scraper head (34) provided with at least one scraper blade (36), and a guide means (46) intended to rest on the outer surface of the pipe (13) and which causes the scraper blade (36) to follow this outer surface, in order to scrape it, along a cylindrical helical path coaxial with the pipe (13);
- a support means (12) which carries both the pipe carrier means (14) and the scraper means (15) such that the distance between the two can be varied;
wherein means (46, 49, 50, 51, 52) are provided to vary the pitch of said helical path.
wherein the guide means (46) comprises idle guide wheels (29) which rest on the surface of the pipe (13), the means for varying the pitch of the helical path being means (46, 49, 50, 51, 52) for varying the angle (C) formed between the axis of rotation of the guide wheels (29) and the axis of the pipe (13) to be scraped;
**characterized in that** the means for varying the angle (C) formed between the axis of rotation of the guide wheels (29) and the axis of the pipe (13) to be scraped comprise:
- a guide body (47) carrying the guide wheels (29) and which in its tum is carried by the body (18) of the scraper means (15) such that it is able to rotate about an axis (48) perpendicular to the axis of the pipe (13) and is incident with this axis;
- a mechanism comprising: an adjustment screw (52) the axis of which is perpendicular to the axis (48) but is not incident with it, the screw (52) being screwable into a threaded through hole (54) provided in the body (18); and an opposing elastic element (51) arranged to urge the body (47) of the guide means (46) against the point of the screw (52).

2. A pipe scraper (10) as claimed in claim 1, wherein the support means (12) forms a single piece with the pipe carrier means (14).

3. A pipe scraper (10) as claimed in claim 1, wherein the scraper means (15) has a body (18) provided with a seat in which two opposing vertical grooves (22) are provided to receive corresponding opposing ribs (24) provided in the support means (12), to enable the scraper means (15) to be moved relative to the support means (12).

4. A pipe scraper (10) as claimed in claim 3, wherein a mechanism comprising a lead screw (26) and lead nut (27) is used for moving the scraper means (15) relative to the support means (12), the lead nut (27) being provided in the support means (12), one end of the lead screw (26) being rotatably connected to the body (18) of the scraper means (15).

5. A pipe scraper (10) as claimed in claim 1, wherein the guide wheels (29) are four in number, arranged in coaxial pairs.

6. A pipe scraper (10) as claimed in claim 1, wherein the pipe carrier means (14) comprises two opposing sets of idle support wheels (16, 17), each wheel (16, 17) of one set being coaxial with a corresponding wheel (16, 17) of the other set.

## Patentansprüche

1. Rohrschaber (10), aufweisend:
- ein Rohrträgermittel (14), auf dem das zu schabende Rohr (13) ruht;
- ein Schabmittel (15), das sowohl einen Schabkopf (34) aufweist, der mit mindestens einer Schabklinge (36) versehen ist, als auch ein Führungsmittel (46), das dazu bestimmt ist, auf der äußeren Fläche des Rohrs (13) zu ruhen, und das die Schabklinge (36) veranlasst, dieser äußeren Fläche zu folgen, um sie entlang eines zylindrischen, zu dem Rohr (13) koaxialen Schraubenwegs abzuschaben;
- ein Tragmittel (12), das sowohl das Rohrträgermittel (14) als auch das Schabmittel (15) trägt, so dass die Entfernung zwischen den beiden variiert werden kann;
wobei Mittel (46, 49, 50, 51, 52) bereitgestellt sind, um die Steigung des Schraubenwegs zu variieren;
wobei das Führungsmittel (46) freie Führungsräder (29) aufweist, die auf der Oberfläche des Rohrs (13) ruhen, wobei das Mittel zum Variieren der Steigung des Schraubenwegs ein Mittel (46, 49, 50, 51, 51) zum Variieren des Winkels (C) ist, der zwischen der Drehachse der Führungsräder (29) und der Achse des abzuschabenden Rohrs (13) gebildet ist,
**dadurch gekennzeichnet, dass** die Mittel zum Variieren des Winkels (C), der zwischen der Drehachse der Führungsräder (29) und der Achse des Rohrs (13) ausgebildet sind, Folgendes aufweisen:
- einen Führungskörper (47), der die Führungsräder (29) trägt, und der seinerseits von dem Körper (18) des Schabmittels (15) derart getragen wird, dass er um eine Achse (48) senkrecht zu der Achse des Rohrs (13) drehbar und auf dieser Achse angeordnet ist,
- einen Mechanismus, Folgendes aufweisend: eine Stellschraube (52), deren Achse zu der Achse (48) senkrecht ist, aber sie nicht trifft, wobei die Schraube (52) in eine durchgehende Gewindebohrung (54) geschraubt werden kann, die in dem Körper (18) bereitgestellt ist, und ein entgegenwirkendes elastisches Element (51), das eingerichtet ist, um den Körper (47) des Führungsmittels (46) gegen die Spitze der Schraube (52) zu drücken.

2. Rohrschaber (10) nach Anspruch 1, wobei das Tragmittel (12) einen einzigen Teil mit dem Rohrträgermittel (14) bildet.

3. Rohrschaber (10) nach Anspruch 1, wobei das Schabmittel (15) einen Körper (18) hat, der mit einem Sitz versehen ist, in dem zwei einander gegenüberliegende vertikale Nuten (22) bereitgestellt sind, um entsprechende gegenüberliegende Rippen (24) aufzunehmen, die in dem Tragmittel (12) bereitgestellt sind, um es dem Schabmittel (15) zu erlauben, relativ zu dem Tragmittel (12) bewegt zu werden.

4. Rohrschaber (10) nach Anspruch 3, wobei ein Mechanismus, der eine Schraubspindel (26) und eine Mutter (27) aufweist, verwendet wird, um das Schabmittel (15) in Bezug zu dem Tragmittel (12) zu bewegen, wobei die Mutter (27) in dem Tragmittel (12) bereitgestellt ist, wobei ein Ende der Schraubspindel (26) drehbar mit dem Körper (18) des Schabmittels (15) verbunden ist.

5. Rohrschaber (10) nach Anspruch 1, wobei es vier Führungsräder (29) gibt, die in koaxialen Paaren angeordnet sind.

6. Rohrschaber (10) nach Anspruch 1, wobei das Rohrtragmittel (14) zwei gegenüberliegende Sätze freilaufender Stützräder (16, 17) aufweist, wobei jedes Rad (16, 17) eines Satzes zu einem entsprechenden Rad (16, 17) des anderen Satzes koaxial ist.

## Revendications

1. Racleur de tuyaux (10) comprenant :
- un moyen de porte-tuyau (14) sur lequel le tuyau (13) à racler repose ;
- un moyen de racleur (15) comprenant à la fois une tête de racleur (34) dotée d'au moins un couteau racleur (36), et un moyen de guidage (46) prévu pour reposer sur la surface externe du tuyau (13) et qui amène le couteau racleur (36) à suivre cette surface externe, afin de la racler, le long d'un chemin hélicoïdal cylindrique coaxial avec le tuyau (13) ;
- un moyen de support (12) qui porte à la fois le moyen de porte-tuyau (14) et le moyen de racleur (15) de sorte que la distance entre les deux peut être modifiée ;
dans lequel des moyens (46, 49, 50, 51, 52) sont prévus pour faire varier le pas dudit chemin hélicoïdal ;
dans lequel le moyen de guidage (46) comprend des roues de guidage folles (29) qui reposent sur la surface du tuyau (13), les moyens permettant de faire varier le pas du chemin hélicoïdal étant des moyens (46, 49, 50, 51, 52) permettant de faire varier l'angle (C) formé entre l'axe de rotation des roues de guidage (29) et l'axe du tuyau (13) à racler ;
**caractérisé en ce que** les moyens permettant de faire varier l'angle (C) formé entre l'axe de rotation des roues de guidage (29) et l'axe du tuyau (13) à racler comprennent :
- un corps de guidage (47) portant les roues de guidage (29) et qui est à son tour porté par le corps (18) du moyen de racleur (15) de sorte qu'il est capable de tourner autour d'un axe (48) perpendiculaire à l'axe du tuyau (13) et qu'il est incident avec cet axe ;
- un mécanisme comprenant : une vis de réglage (52) dont l'axe est perpendiculaire à l'axe (48) mais n'est pas incident avec ce dernier, la vis (52) pouvant être vissée dans un trou traversant fileté (54) prévu dans le corps (18) ; et un élément élastique opposé (51) agencé pour pousser le corps (47) du moyen de guidage (46) contre la pointe de la vis (52).

2. Racleur de tuyaux selon la revendication 1, dans lequel le moyen de support (12) forme une seule pièce avec le moyen de porte-tuyau (14).

3. Racleur de tuyaux (10) selon la revendication 1, dans lequel le moyen de racleur (15) a un corps (18) doté d'un siège dans lequel deux rainures verticales opposées (22) sont prévues pour recevoir des nervures opposées correspondantes (24) prévues dans le moyen de support (12), afin de permettre au moyen de racleur (15) d'être déplacé par rapport au moyen de support (12).

4. Racleur de tuyaux (10) selon la revendication 3, dans lequel un mécanisme comprenant une vis mère (26) et un écrou principal (27) est utilisé pour déplacer le moyen de racleur (15) par rapport au moyen de support (12), l'écrou principal (27) étant prévu dans le moyen de support (12), une extrémité de la vis mère (26) étant raccordée de façon rotative au corps (18) du moyen de racleur (15).

5. Racleur de tuyaux (10) selon la revendication 1, dans lequel les roues de guidage (29) sont au nombre de quatre, agencées en paires coaxiales.

6. Racleur de tuyaux (10) selon la revendication 1, dans lequel le moyen de porte-tuyau (14) comprend deux ensembles opposés de roues de support folles (16, 17), chaque roue (16, 17) d'un jeu étant coaxiale avec une roue correspondante (16, 17) de l'autre ensemble.
